Europäisches Patentamt

European Patent Office

Office européen des brevets

(11) Publication number : **0 519 653 A1**

# (12) EUROPEAN PATENT APPLICATION

(21) Application number : **92305407.6**

(22) Date of filing : **12.06.92**

(51) Int. Cl.⁵ : **B60R 16/02, H02G 3/26, F16L 3/12**

(30) Priority : **17.06.91 US 716301**

(43) Date of publication of application :
**23.12.92 Bulletin 92/52**

(84) Designated Contracting States :
**DE FR GB IT**

(71) Applicant : **EMHART INC.**
**Drummond Plaza Office Park, 1423, Kirkwood Highway**
**Newark, Delaware 19711 (US)**

(72) Inventor : **Burns, Timothy J.**
**561 North Riverside**
**St. Clair, Michigan 48079 (US)**
Inventor : **Higgins, Lawrence J.**
**11821 Meteor Drive**
**Sterling Heights, Michigan 48313 (US)**
Inventor : **Jackson, Nicholas**
**136 North Main**
**Marine City, Michigan 48039 (US)**
Inventor : **Benedetti, Nicholas M.**
**14501 Eastport**
**Sterling Heights, Michigan 48078 (US)**

(74) Representative : **Randall, John Walter et al**
**Emhart Patents Department, Lyn House, 39 The Parade**
**Oadby, Leicester LE2 5BB (GB)**

(54) **Wire bundle retainer.**

(57) A retainer which may be used to secure a wire bundle to a panel comprises hinged U shaped portions which can be releasably closed to clamp the bundle between deflectable pairs of spreadable wings.

FIG. I

EP 0 519 653 A1

Wire bundles are routed within a car body to interconnect the electrical components with their controller.

It is important for any fastener used in a car to be light weight to minimize car weight, easy to install to keep labor charges to a minimum and rattleproof to avoid passenger annoyance.

It is accordingly an object of the present invention to provide a wire bundle retainer which is light weight, simple to install and rattleproof.

The present invention provides a molded plastic wire bundle retainer comprising upper and lower "U" shaped portions,

a flexible hinge interconnecting one end of the upper and lower U shaped portions,

means for releasably interconnecting the other ends of the upper and lower U shaped portions

fastener means for securing the wire bundle retainer to a workpiece

the upper U shaped portion including a top wall having a pair of wings extending downwardly and outwardly from either side thereof and pivotally bendable relative thereto,

the downwardmost edge of each of said wings being notched,

the lower U shaped portion including a bottom wall having a pair of wings extending upwardly and outwardly from either side thereof and pivotally bendable relative thereto, the uppermost edge of each of said wings being notched,

whereby when a wire bundle is located between said upper and lower wing pair as the upper U shaped portion is pivoted relative to said lower U shaped portion to releasably interconnect said portions, said wings will be forced to pivot further outwardly with the wing notches centering the wire bundle in said retainer as the wire bundle is clamped therebetween.

There now follows a description of a wire bundle retainer which has been selected for description to illustrate the invention by way of example.

In the accompanying drawings:

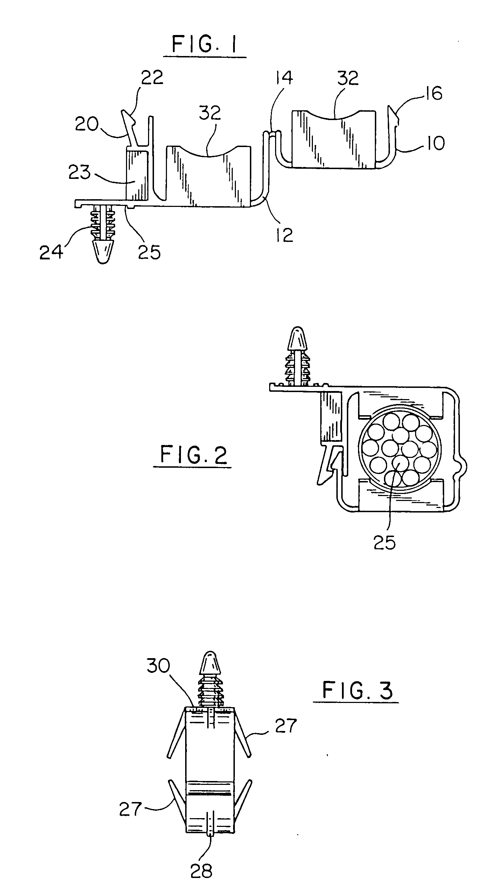

Figure 1 is a side view of a wire bundle retainer embodying the invention;

Figure 2 is a side view of the wire bundle retainer secured in position retaining a wire bundle; and

Figure 3 is an end view of the wire bundle retainer secured in position without retaining a wire bundle.

The wire bundle retainer which is molded from plastic has upper 10 and lower 12 "U" shaped portions which have two ends interconnected by a flexible hinge and means for releasably interconnecting their other two ends. A triangular catch 16 defined at the free end of the upper U shaped portion is received by a latch defined between a free end 18 of the lower U shaped portion and deflectable element 20 having a triangular latch 22. The force required to deflect this deflectable element 20 is increased by locating a non deflectable strut 23 below the deflectable member.

The retainer comprises a fastener 24 located on an extension 25 for securing the retainer to a work piece. The fastener 24 is of the type often referred to as a Christmas tree fastener but which can be any other type of fastener and located on any convenient portion of the retainer. In use, the fastener 24 is pushed into a suitable hole in the body of a car and a bundle of wires 25 is located between opposed pairs of spaced wings 27 which project from the top 28 and bottom 30 walls of the upper and lower portions. As the upper and lower portions 10, 12, are closed on the wire bundle 25 these wings 27, which are initially slightly bowed outwardly, spread further outwardly clamping the wire bundle 25 therebetween. Wire bundle engaging edges of the wings are notched at 32 to center the wire bundle 25: inner edges of these notches have a radius to prevent the cutting of the wire bundle. The wings may be tapered so that they are thinner at the notched edge. When the wire bundle is fully clamped, the latch and catch cooperate to maintain the wire bundle retained within the retainer.

## Claims

1. A molded plastic wire bundle retainer comprising upper (10) and lower (12) "U" shaped portions,

a flexible hinge (14) interconnecting one end of the upper and lower U shaped portions,

means for releasably interconnecting the other ends of the upper and lower U shaped portions

fastener means for securing the wire bundle retainer to a workpiece

the upper U shaped portion (10) including a top wall (28) having a pair of wings (27, 27) extending downwardly and outwardly from either side thereof and pivotally bendable relative thereto,

the downwardmost edge of each of said wings being notched,

the lower U shaped portion (12) including a bottom wall (30) having a pair of wings (27,27) extending upwardly and outwardly from either side thereof and pivotally bendable relative thereto, the uppermost edge of each of said wings being notched

whereby when a wire bundle is located between said upper and lower wing pair as the upper U shaped portion is pivoted relative to said lower U shaped portion to releasably interconnect said portions, said wings will be forced to pivot further outwardly with the wing notches centering the wire bundle in said retainer as the wire bundle is clamped therebetween.

2. A wire bundle retainer according to claim 1, wherein bundle engaging edges of the wings are notched centrally to locate the wire bundle.

3. A wire bundle retainer according to claim 2, wherein the wings are thinner at their bundle engaging edges than at the wall.

FIG. 1

FIG. 2

FIG. 3

EP 0 519 653 A1

European Patent Office

**EUROPEAN SEARCH REPORT**

Application Number

EP 92 30 5407

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 935 628 (B.M.W) <br> * the whole document * <br> --- | 1 | B60R16/02 <br> H02G3/26 <br> F16L3/12 |
| A | DE-A-3 705 626 (RAYMOND) <br> * the whole document * <br> --- | 1 | |
| A | US-A-2 742 249 (BENYA) <br> * the whole document * <br> --- | 1 | |
| A | GB-A-582 682 (UNITED CARR FASTENER CORP.) <br> * the whole document * <br> --- | 1 | |
| A | FR-A-2 200 655 (ITW LIMITED) <br> * the whole document * <br> ----- | 1-3 | |
| | | | TECHNICAL FIELDS SEARCHED (Int. Cl.5 ) <br><br> B60R <br> H02G <br> F16L |

The present search report has been drawn up for all claims

| Place of search | Date of completion of the search | Examiner |
|---|---|---|
| THE HAGUE | 28 SEPTEMBER 1992 | GEYER J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)

5